(19)

Europäisches
Patentamt

European
Patent Office

Office européen
des brevets

(11) **EP 4 606 859 A1**

(12) **EUROPEAN PATENT APPLICATION**
published in accordance with Art. 153(4) EPC

(43) Date of publication:
**27.08.2025 Bulletin 2025/35**

(21) Application number: **23880235.9**

(22) Date of filing: **18.10.2023**

(51) International Patent Classification (IPC):
**C08L 67/04** (2006.01)  **C08K 5/00** (2006.01)
**C09D 167/04** (2006.01)

(52) Cooperative Patent Classification (CPC):
**C08K 5/00; C08L 67/04; C09D 167/04**

(86) International application number:
**PCT/KR2023/016179**

(87) International publication number:
**WO 2024/085658 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.10.2022 KR 20220134966**

(71) Applicant: **CJ CheilJedang Corporation
Seoul 04560 (KR)**

(72) Inventors:
- KIM, Ji Hun
  **Seoul 04560 (KR)**
- JEONG, Jae Deok
  **Seoul 04560 (KR)**
- SHIM, Yoo-Kyoung
  **Seoul 04560 (KR)**
- YOON, Ki Chull
  **Seoul 04560 (KR)**

(74) Representative: **Meissner Bolte Partnerschaft
mbB
Patentanwälte Rechtsanwälte
Postfach 86 06 24
81633 München (DE)**

(54) **BIODEGRADABLE RESIN COMPOSITION FOR EXTRUSION COATING**

(57)  The present invention relates to a biodegradable resin composition for extrusion coating. Specifically, the biodegradable resin composition for extrusion coating, according to one embodiment of the present invention, contains 5 wt% to 95 wt% of polyhydroxyalkanoates (PHA) and has a melt flow index (MI) of 5 g/10 min to 60 g/10 min at 190°C and 2.16 kg according to ASTM D1238, the PHA meeting a weight average molecular weight range of 30,000 g/mol to 1,200,000 g/mol, and thus can achieve processability and mechanical properties such as excellent thermal adhesive strength even at low temperatures.

[Fig. 1]

Example 2-1

Comparative Example 2-5

EP 4 606 859 A1

## Description

### Technical Field

The present disclosure relates to a biodegradable resin composition for extrusion coating having excellent mechanical properties such as thermal adhesive strength and processability even at low temperatures.

### Background Art

In recent years, as concerns about environmental problems have increased, research on the treatment and recycling of various household wastes has been actively conducted. Specifically, although polymer materials, which are inexpensive and have excellent processability, are widely used to manufacture various products such as paper, films, fibers, packaging materials, bottles, and containers, harmful substances may be discharged when they are incinerated as the lifespan of these products is over. Further, it takes hundreds of years depending on their types to completely decompose naturally.

Therefore, research on biodegradable polymers continues, which can be decomposed within a short period of time to enhance environmental friendliness, while enhancing mechanical properties and processability, and increasing the lifespan of products themselves, thereby reducing the amount of waste or enhancing their recyclability.

Polyhydroxyalkanoates (PHAs) are biodegradable resins composed of several types of hydroxyl carboxylic acids produced by numerous microorganisms and used as intracellular storage materials. Polyhydroxyalkanoates have physical properties similar to those of conventional petroleum-derived synthetic resins such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, previously, materials such as polyethylene (PE) and ethylene vinyl acetate (EVA), which have excellent processability by virtue of long chain branches and high melt strength, have been mainly used as resins for extrusion coating. However, since PE and EVA have the disadvantage of low thermal resistance, research has been ongoing to enhance thermal resistance. As an alternative, polypropylene (PP) has been used, but its use has been limited to cup ramen containers and HMR food containers due to its low processability and melt strength.

In addition, PE, EVA, and PP are petrochemical-based resins derived from petroleum; thus, they are not biodegradable in soil or the ocean, thereby causing environmental pollution and raising environmental issues in recent years. To solve these problems, resins for extrusion coating have been developed using biodegradable resins such as polylactic acid (PLA), PBS, and PBAT. Most of these biodegradable resins only decompose under specific conditions and have the disadvantage of not biodegrading well in the ocean.

In addition, these biodegradable resins have poor mechanical properties, such as thermal adhesive strength, and the extrusion coating process often operates at much higher temperatures than film processing, which makes the resins thermally decompose and difficult to process. Petroleum-based plastics are processed at a temperature of 300°C or higher to increase processability, while most biodegradable resins are thermally decomposed at 300°C or higher, and their melt strength also decreases, making the process difficult to operate properly. They may be thermally decomposed even at a temperature of 260°C or higher when exposed to heat for a long period of time. It prevents a molten resin layer from being properly formed during extrusion coating processing, causing the thickness to be uneven, thereby making high-speed operation difficult. For the above reasons, many companies that produce biodegradable resins are still unable to produce proper biodegradable resins for extrusion coating. Accordingly, research is ongoing on a biodegradable resin composition that is environmentally friendly by virtue of excellent biodegradability and biocompatibility and is suitable for an extrusion coating process by virtue of excellent mechanical properties such as thermal adhesive strength and processability even at low temperatures.

[Prior Art Document]

[Patent Document]

(Patent Document 1) Korean Laid-open Patent Publication No. 2021-0008466

### Disclosure of Invention

### Technical Problem

Accordingly, the present disclosure aims to provide a biodegradable resin composition that is environmentally friendly since it is biodegradable in soil and the ocean by virtue of excellent biodegradability and biocompatibility and is suitable for an extrusion coating process by virtue of excellent mechanical properties such as thermal adhesive strength and processability even at low temperatures.

**Solution to Problem**

The biodegradable resin composition for extrusion coating according to an embodiment of the present disclosure comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, wherein the PHA has a weight average molecular weight of 30,000 g/mole to 1,200,000 g/mole.

According to an embodiment of the present disclosure, the biodegradable resin composition for extrusion coating has a viscosity reduction rate (S) of 25% to 99% according to the following Equation 1.

$$[\text{Equation 1}]$$

$$S = ((S_{100} - S_1)/S_1) \times 100$$

In Equation 1, when the viscosity of the biodegradable resin composition for extrusion coating is measured at 210°C at a shear rate (1/s) of 1 to 100, $S_1$ is the viscosity (Pa·s) measured at the shear rate of 1, and $S_{100}$ is the viscosity (Pa·s) measured at the shear rate of 100.

According to an embodiment of the present disclosure, $S_1$ may be 50 Pa·s to 1,200 Pa·s, and $S_{100}$ may be 30 Pa·s to 300 Pa·s.

According to an embodiment of the present disclosure, the biodegradable resin composition for extrusion coating has a repulping value (P, %) of 40% or more according to the following Equation 2.

$$[\text{Equation 2}]$$

$$P = ((24 - R)/24) \times 100$$

In Equation 2, when a biodegradable coating layer is formed using the biodegradable resin composition for extrusion coating on a paper substrate (basis weight: 30 g/m$^2$ to 500 g/m$^2$) to obtain a biodegradable laminate, 24 g of a dry sample thereof is dissociated at a concentration of 1.2% in water (dissociation energy consumption: 20 kWh/t) to obtain a slurry, and the slurry is circulated through a screen in the form of a slit of 0.15 mm at 10 L/minute for 15 minutes, R is the dry mass (g) of the residual substance.

According to an embodiment of the present disclosure, the biodegradable resin composition for extrusion coating may have a biocarbon content of 25% or more based on the radiocarbon isotope content according to ASTM D 6866-20 Method B (AMS).

According to an embodiment of the present disclosure, the PHA may comprise a 4-hydroxybutyrate (4-HB) repeat unit in an amount of 0.1% by weight to 50% by weight.

According to an embodiment of the present disclosure, the PHA may have a melt flow index (MI) of 0.5 g/10 minutes to 60 g/10 minutes when measured at 190°C and 2.16 kg according to ASTM D1238.

According to an embodiment of the present disclosure, the PHA may comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 4-hydroxybutyrate (4-HB), 5-hydroxyvalerate (5-HV), and 6-hydroxyhexanoate (6-HH).

According to an embodiment of the present disclosure, the biodegradable resin composition for extrusion coating may further comprise at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene.

According to an embodiment of the present disclosure, the biodegradable resin composition for extrusion coating may further comprise a polylactic acid (PLA), and the PLA may have a melt flow index (MI) of 3 g/10 minutes to 40 g/10 minutes when measured at 190°C and 2.16 kg according to ASTM D1238, a melt flow index (MI) of 25 g/10 minutes to 80 g/10 minutes when measured at 210°C and 2.16 kg according to ASTM D1238, and a glass transition temperature (Tg) of 45°C to 65°C.

According to an embodiment of the present disclosure, the weight ratio of the PHA to the PLA may be 5:95 to 95:5.

According to an embodiment of the present disclosure, the biodegradable resin composition for extrusion coating may further comprise at least one additive selected from the group consisting of slip agents, plasticizers, antioxidants, nucleating agents, lubricants, melt strength enhancers, and chain extenders.

According to an embodiment of the present disclosure, the biodegradable resin composition for extrusion coating may comprise the additive in an amount of 0.05 phr to 20 phr.

According to an embodiment of the present disclosure, the plasticizer may comprise at least one selected from the group consisting of ethyl acetate, polyethylene glycol (PEG), triethyl citrate (TEC), erucamide, oleamide, stearamide, epoxidized soybean oil, dibutyl phthalate (DBP), sorbitol, carnauba wax, glycerol mono stearate (GMS), polyvinylacetate polymers, and vinyl acetate copolymers.

According to an embodiment of the present disclosure, the chain extender may comprise at least one selected from the group consisting of 2,5-dimethyl-2,5-(di-(tert-butylperoxy)hexane (DTBPH), pyromellitic dianhydride (PMDA), hexamethylene diisocyanate (HMDI), dicumyl peroxide (DCP), polycarbodiimide (PCDI), di-(tert-butylperoxyisopropyl) benzene (DTBPIB), epoxides, polyamides, and oxazolines.

A biodegradable laminate according to another embodiment of the present disclosure comprises a substrate layer; and a biodegradable coating layer on at least one side of the substrate layer, wherein the biodegradable coating layer is formed from a biodegradable resin composition for extrusion coating comprising a polyhydroxyalkanoate (PHA) in an amount of 5% by weight to 95% by weight, the biodegradable resin composition has a melt flow index (MI) of 5 g/10 minutes to 60 g/10 minutes when measured at 190°C and 2.16 kg according to ASTM D1238, and the PHA has a weight average molecular weight of 30,000 g/mole to 1,200,000 g/mole.

A process for preparing a biodegradable laminate according to another embodiment of the present disclosure comprises preparing a biodegradable resin composition for extrusion coating; and extrusion coating the biodegradable resin composition for extrusion coating on at least one side of a substrate to form a biodegradable coating layer, wherein the biodegradable resin composition for extrusion coating comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, and the PHA has a weight average molecular weight of 30,000 g/mole to 1,200,000 g/mole.

## Advantageous Effects of Invention

The biodegradable resin composition for extrusion coating, according to one embodiment of the present disclosure, contains 5 wt% to 95 wt% of polyhydroxyalkanoates (PHA) and has a melt flow index (MI) of 5 g/10 min to 60 g/10 min at 190°C and 2.16 kg according to ASTM D1238, the PHA meeting a weight average molecular weight range of 30,000 g/mol to 1,200,000 g/mol, and thus can achieve processability and mechanical properties such as excellent thermal adhesive strength even at low temperatures.

Specifically, as the biodegradable resin composition for extrusion coating comprises a polyhydroxyalkanoate (PHA) resin, it is environmentally friendly since it can be biodegraded in soil and the ocean by virtue of its excellent biodegradability and biocompatibility. In addition, since the biodegradable resin composition for extrusion coating comprises a PHA and a PLA with controlled flowability, it has a melt flow index (MI) controlled to 5 g/10 minutes to 60 g/10 minutes when measured at 190°C and 2.16 kg according to ASTM D1238. As a result, an extrusion coating process can be smoothly carried out at a temperature of 150°C to 260°C, which is lower than the temperature of 300°C at which the conventional extrusion coating process is carried out, and the mechanical properties such as thermal adhesive strength are also excellent.

In particular, an extrusion coating process can be carried out at a temperature lower than the temperature of the conventional extrusion coating process and at a temperature at which biodegradable thermal decomposition does not take place. More specifically, even at a temperature lower than the temperature of 300°C, which is the processing condition for PE and PP resins that are conventionally used as resins for extrusion coating, similar flowability to that of PE and PP resins can be secured, resulting in very excellent processability.

Accordingly, the biodegradable resin composition for extrusion coating is environmentally friendly since it is biodegradable in soil and the ocean and is suitable for an extrusion coating process. When it is used as a packaging material for food or masks, as well as a material for paper packs such as milk cartons that require sealing properties or oxygen and moisture barrier properties, it can produce excellent effects.

## Brief Description of Drawings

Fig. 1 is a photograph showing the results of evaluating processability according to Evaluation Example 2-1 of Example 2-1 and Comparative Example 2-5.

Fig. 2 is a photograph showing that a coating layer was not formed in the extrusion coating process of Comparative Example 2-1.

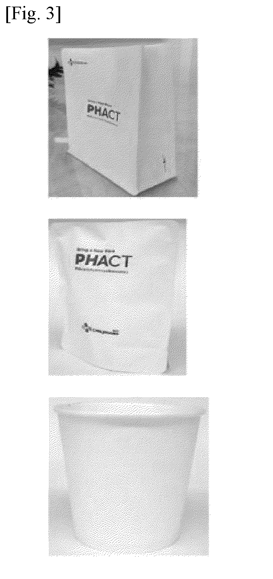

Fig. 3 is a photograph of an extrusion coating product manufactured using a biodegradable resin composition for extrusion coating according to an embodiment of the present disclosure.

Fig. 4 shows the results of rheology measurements of a biodegradable resin composition for extrusion coating according to an embodiment of the present disclosure and PLA, PE, and PP, which have been conventionally used as extrusion coating resins.

## Best Mode for Carrying out the Invention

Hereinafter, the present disclosure will be described in detail. The present disclosure is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

## Biodegradable resin composition for extrusion coating

The biodegradable resin composition for extrusion coating according to an embodiment of the present disclosure comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, wherein the PHA has a weight average molecular weight of 30,000 g/mole to 1,200,000 g/mole.

The biodegradable resin composition for extrusion coating can be smoothly processed according to an extrusion coating process even at a temperature of 260°C or lower, which is a temperature at which thermal decomposition does not take place. More specifically, it has excellent extrusion coating performance even at a low temperature of 230°C or lower.

The biodegradable resin composition for extrusion coating can be processed even at a temperature of 260°C, lower than the temperature of 300°C, which is the processing condition for PE and PP resins that have been conventionally used as resins for extrusion coating, and similar flowability can be secured as when the PE and PP resins are extrusion coated at 300°C, resulting in very excellent processability.

According to an embodiment of the present disclosure, the biodegradable resin composition for extrusion coating comprises a PHA.

PHA is a natural thermoplastic polyester polymer that accumulates in microbial cells. Since it is a biodegradable material, it can be composted and finally decomposed into carbon dioxide, water, and organic waste without generating toxic waste.

Specifically, PHA is a natural thermoplastic polyester polymer that accumulates in microbial cells. It is formed by accumulating PHA in cells to store carbon and energy when certain bacteria are supplied with nutrients (nitrogen source, phosphorus, and the like) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHA can be prepared depending on the types of monomers. Hundreds of different types of PHA depending on the types of monomers have completely different structures and properties.

PHA may be composed of a single monomer repeat unit in living cells and may be formed by polymerizing one or more monomer repeat units. Specifically, the PHA may be a homo-polyhydroxyalkanoate (hereinafter, referred to as HOMO PHA) or may be a polyhydroxyalkanoate copolymer (hereinafter, referred to as a PHA copolymer), that is, a copolymer in which different repeat units are regularly or randomly distributed in the polymer chains.

Examples of repeat units that may be contained in the PHA include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA may contain one or more repeat units selected from the above.

Specifically, the PHA may comprise one or more repeat units selected from the group consisting of 3-HB, 4-HB, 3-HP, 3-HH, 3-HV, 4-HV, 5-HV, and 6-HH.

More specifically, the PHA may comprise a 4-HB repeat unit in an amount of 0.1% by weight to 50% by weight. For example, the PHA may comprise a 4-HB repeat unit in an amount of 0.1% by weight to 48% by weight, 0.1% by weight to 46% by weight, 0.5% by weight to 50% by weight, 10% by weight to 50% by weight, 20% by weight to 50% by weight, 25% by weight to 50% by weight, 0.1% by weight to 40% by weight, 0.5% by weight to 40% by weight, 1% by weight to 35% by weight, or 5% by weight to 30% by weight.

As the content of a 4-HB repeat unit satisfies the above range, processability suitable for an extrusion coating process can be secured. Specifically, as the content of a 4-HB repeat unit satisfies the above range, it is possible to have excellent extrusion coating performance that enables processing even at a temperature of 260°C or lower at which no thermal decomposition takes place, more specifically, at a temperature of 150°C to 260°C, 150°C to 230°C, or 160°C to 210°C. In addition, if the content of a 4-HB repeat unit is less than 0.1% by weight, the crystallinity is too high, making processing difficult due to the load on the extruder. If it exceeds 50% by weight, the crystallinity is too low, making it difficult to sufficiently secure the strength of a molten resin layer, whereby processing cannot be carried out smoothly.

In addition, the PHA may be a PHA copolymer that comprises a 4-HB repeat unit and further comprises one repeat unit different from the 4-HB repeat unit, or two, three, four, five, six, or more repeat units different from each other. For example, the PHA may be poly-3-hydroxybutyrate-co-4-hydroxybutyrate (hereinafter, referred to as 3HB-co-4HB).

In addition, the PHA may comprise isomers. For example, the PHA may comprise structural isomers, enantiomers, or geometric isomers. Specifically, the PHA may comprise structural isomers.

In addition, the PHA may be a PHA copolymer with controlled crystallinity. For example, the PHA may comprise at least one or more of a 4-HB repeat unit, and the content of the 4-HB repeat unit may be controlled to adjust the crystallinity of the PHA.

For example, the PHA may be a PHA copolymer that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the PHA copolymer may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA copolymer may comprise a 4-HB repeat unit and a 3-HB repeat unit.

In addition, the PHA may be a PHA copolymer that comprises a 4-HB repeat unit and a 3-HB repeat unit and may comprise the 3-HB repeat unit in an amount of 20% by weight or more. For example, the PHA may comprise the 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

The PHA whose crystallinity is adjusted may be one in which its crystallinity and amorphousness are adjusted as the irregularities are increased in its molecular structure. Specifically, the types or ratios of the monomers or the types or contents of the isomers may be adjusted.

According to an embodiment of the present disclosure, the PHA may comprise two or more types of PHA having different crystallinities. Specifically, the PHA may be prepared by mixing two or more types of PHA having different crystallinities to have the content of a 4-HB repeat unit in the specific range.

Specifically, the PHA may comprise a first PHA that is a semi-crystalline PHA and a second PHA that is an amorphous PHA. More specifically, the first PHA may be a semi-crystalline PHA with controlled crystallinity, and the second PHA may be an amorphous PHA with controlled crystallinity. The PHA used in an embodiment of the present disclosure may comprise the semi-crystalline PHA or the amorphous PHA. Further, the PHA used in an embodiment of the present disclosure may be a mixture of the semi-crystalline PHA and the amorphous PHA.

In addition, the glass transition temperature (Tg) of the PHA may be -45°C to 80°C, -35°C to 80°C, -30°C to 80°C, -25°C to 75°C, -20°C to 70°C, -35°C to 5°C, -25°C to 5°C, -35°C to 0°C, -25°C to 0°C, -30°C to -10°C, -35°C to -15°C, -35°C to -20°C, -20°C to 0°C, -15°C to 0°C, or -15°C to -5°C.

The crystallization temperature (Tc) of the PHA may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

In addition, the PHA may have a weight average molecular weight of 30,000 g/mole to 1,200,000 g/mole. For example, the weight average molecular weight of the PHA may be 50,000 g/mole to 1,200,000 g/mole, 100,000 g/mole to 1,200,000 g/mole, 200,000 g/mole to 1,200,000 g/mole, 350,000 g/mole to 1,200,000 g/mole, 400,000 g/mole to 1,200,000 g/mole, 600,000 g/mole to 1,200,000 g/mole, 100,000 g/mole to 1,000,000 g/mole, or 200,000 g/mole to 900,000 g/mole.

If the weight average molecular weight of the PHA is less than 30,000 g/mole, the melt strength is too low, making it difficult to form a molten resin layer, i.e., a coating layer, according to an extrusion coating process. If the weight average molecular weight of the PHA exceeds 1,200,000 g/mole, processing may be difficult due to the load within the extruder.

In addition, the PHA may have a melt flow index (MI) of 0.5 g/10 minutes to 60 g/10 minutes when measured at 190°C and 2.16 kg according to ASTM D1238. For example, the melt flow index (MI) of the PHA measured at 190°C and 2.16 kg according to ASTM D1238 may be 0.5 g/10 minutes to 40 g/10 minutes, 0.7 g/10 minutes to 35 g/10 minutes, 0.9 g/10 minutes to 35 g/10 minutes, 1 g/10 minutes to 35 g/10 minutes, 1.5 g/10 minutes to 30 g/10 minutes, 3 g/10 minutes to 30 g/10 minutes, 0.7 g/10 minutes to 15 g/10 minutes, 0.8 g/10 minutes to 10 g/10 minutes, 1 g/10 minutes to 8 g/10 minutes, 1 g/10 minutes to 5 g/10 minutes, 20 g/10 minutes to 60 g/10 minutes, 0.5 g/10 minutes to 5 g/10 minutes, 0.5 g/10 minutes to 3 g/10 minutes, or 2 g/10 minutes to 15 g/10 minutes. As the melt flow index of the PHA satisfies the above range, it is possible to have excellent extrusion coating performance that enables processing even at a temperature of 260°C or lower at which no thermal decomposition takes place, more specifically, at a temperature of 150°C to 260°C.

The PHA may have a crystallinity of 90% or less as measured by a differential scanning calorimeter (DSC). For example, the crystallinity of the PHA may be measured by differential scanning calorimetry and may be 90% or less, 85% or less, 80% or less, 75% or less, or 70% or less.

The PHA may have a polydispersity index (PDI) of less than 3. For example, the polydispersity index of the PHA may be 2.5 or less, 2.1 or less, or 2.0 or less.

The PHA may be obtained by cell disruption using a non-mechanical method or a chemical method. Specifically, since the PHA is a natural thermoplastic polyester polymer that accumulates in microbial cells and has a relatively large average particle size, it may be obtained through a disruption process in order to more effectively control the yield of the desired material and enhance the process efficiency.

According to an embodiment of the present disclosure, the biodegradable resin composition for extrusion coating comprises the PHA in an amount of 5% by weight to 95% by weight. For example, the content of the PHA may be 5% by weight to 90% by weight, 10% by weight to 95% by weight, 10% by weight to 90% by weight, 5% by weight to 80% by weight, or 10% by weight to 80% by weight, based on the total weight of the biodegradable resin composition for extrusion coating.

Specifically, as the content of the PHA satisfies the above range, processability suitable for an extrusion coating process can be secured. More specifically, if the content of the PHA is less than 5% by weight, the melt flowability and biodegradation rate may be reduced, and cracking at low temperatures cannot be prevented. In addition, if the content of the PHA exceeds 95% by weight, it is difficult to form a proper coating layer on a substrate due to the low crystallization rate of the PHA.

In addition, the biodegradable resin composition for extrusion coating may further comprise at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene.

The PHA may expedite the decomposition rate of a biodegradable resin used together. As it is used together with at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene, the effect of blocking such components as oxygen and moisture can be controlled, whereby oxygen blocking properties and moisture blocking properties can be further enhanced.

Specifically, the biodegradable resin composition for extrusion coating may further comprise a polylactic acid (PLA). More specifically, the biodegradable resin composition for extrusion coating may comprise a PHA and a PLA. As a PLA with controlled flowability is used together with the PHA, the biodegradability and extrusion processability can be further enhanced.

The PLA may have a melt flow index (MI) of 3 g/10 minutes to 40 g/10 minutes when measured at 190°C and 2.16 kg according to ASTM D1238. For example, the melt flow index (MI) of the PLA measured at 190°C and 2.16 kg according to ASTM D1238 may be 5 g/10 minutes to 40 g/10 minutes, 10 g/10 minutes to 40 g/10 minutes, 8 g/10 minutes to 35 g/10 minutes, 10 g/10 minutes to 25 g/10 minutes, or 15 g/10 minutes to 24 g/10 minutes.

The PLA may have a melt flow index (MI) of 25 g/10 minutes to 80 g/10 minutes when measured at 210°C and 2.16 kg according to ASTM D1238. For example, the melt flow index (MI) of the PLA measured at 210°C and 2.16 kg according to ASTM D1238 may be 26 g/10 minutes to 65 g/10 minutes, 30 g/10 minutes to 62 g/10 minutes, 35 g/10 minutes to 80 g/10 minutes, or 40 g/10 minutes to 60 g/10 minutes.

The PLA may have a glass transition temperature (Tg) of 45°C to 65°C. For example, the glass transition temperature (Tg) of the PLA may be 45°C to 60°C, 50°C to 65°C, or 55°C to 60°C.

According to an embodiment of the present disclosure, the biodegradable resin composition for extrusion coating may comprise the PLA in an amount of 5% by weight to 95% by weight. For example, the content of the PLA may be 10% by weight to 95% by weight, 20% by weight to 95% by weight, 30% by weight to 95% by weight, 10% by weight to 90% by weight, 30% by weight to 90% by weight, 5% by weight to 80% by weight, or 10% by weight to 80% by weight, based on the total weight of the biodegradable resin composition for extrusion coating.

In addition, the weight ratio of the PHA to the PLA may be 5:95 to 95:5. For example, the weight ratio of the PHA to the PLA may be 5:95 to 90:10, 10:90 to 80:20, 20:80 to 70:30, 50:50 to 70:30, or 5:95 to 50:50.

As the melt flow index and glass transition temperature of the PLA each satisfy the above ranges, processability suitable for an extrusion coating process can be secured. In addition, as the content of the PLA and the weight ratio with the PHA each satisfy the above ranges, processability suitable for an extrusion coating process can be further enhanced.

According to an embodiment of the present disclosure, the biodegradable resin composition for extrusion coating may further comprise at least one additive selected from the group consisting of slip agents, plasticizers, antioxidants, nucleating agents, lubricants, melt strength enhancers, and chain extenders.

In addition, the biodegradable resin composition for extrusion coating may comprise the additive in an amount of 0.05 phr to 20 phr. For example, the content of the additive may be 0.05 phr to 15 phr, 0.1 phr to 10 phr, 0.15 phr to 8 phr, 0.2 phr to 6 phr, or 0.5 phr to 3 phr. Here, phr (per hundred resin) refers to a unit of input amount of a material added per 100 parts by weight of a polymer (1 phr: 1 g input amount when the polymer is 100 g).

The slip agent may comprise at least one selected from the group consisting of fatty acids or salts thereof, waxes, and amide-based compounds. For example, the slip agent may comprise at least one selected from the group consisting of stearic acid or its monomer, oleic acid or its monomer, palmitic acid or its monomer, silicone, fatty acid alcohol, oleamide, erucamide, stearamide, calcium stearate, zinc stearate, magnesium stearate, aluminum stearate, potassium oleate, zinc oleate, magnesium oleate, aluminum oleate, calcium palmitate, zinc palmitate, magnesium palmitate, aluminum palmitate, ethylenebis(stearamide) (EBS), bees wax, carnauba wax, and candelila wax.

In addition, the biodegradable resin composition for extrusion coating may comprise the slip agent in an amount of 0.1 phr to 5 phr. For example, the content of the slip agent may be 0.1 phr to 3 phr, 0.2 phr to 2.5 phr, 0.3 phr to 1.5 phr, or 0.5 phr to 1.2 phr.

The plasticizer may comprise at least one selected from the group consisting of ethyl acetate, polyethylene glycol (PEG), triethyl citrate (TEC), erucamide, oleamide, stearamide, epoxidized soybean oil, dibutyl phthalate (DBP), carnauba wax, glycerol mono stearate (GMS), sorbitol, polyvinylacetate polymers, and vinyl acetate copolymers.

In addition, the biodegradable resin composition for extrusion coating may comprise the plasticizer in an amount of 0.05 phr to 10 phr. For example, the content of the plasticizer may be 0.1 phr to 8 phr, 0.1 phr to 5 phr, 0.2 phr to 2 phr, or 0.5 phr to 1.5 phr.

The antioxidant is an additive for preventing decomposition by ozone or oxygen, preventing oxidation during storage, or preventing deterioration of physical properties. Common antioxidants may be used as long as the effects of the present disclosure are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl) proplonyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The biodegradable resin composition for extrusion coating may comprise the antioxidant in an amount of 0.05 phr to 10 phr. For example, the content of the antioxidant may be 0.1 phr to 3 phr, 0.2 phr to 2.5 phr, 0.3 phr to 1.5 phr, or 0.5 phr to 1.2 phr.

The nucleating agent may serve to more effectively control the crystallinity of the biodegradable resin composition for extrusion coating. Processability such as processing speed can be further enhanced in the preparation process using the same. For example, the nucleating agent may comprise carbonates, silicates, or the like. For example, the nucleating agent may be calcium carbonate, silica, talc, boron nitride, cellulose, sorbitol derivatives, or the like, but it is not limited thereto.

In addition, the biodegradable resin composition for extrusion coating may comprise the nucleating agent in an amount of 0.1 phr to 20 phr. For example, the content of the nucleating agent may be 1 phr to 20 phr, 3 phr to 18 phr, 5 phr to 15 phr, or 6 phr to 10 phr.

The lubricant is a component added to strengthen the bonding or affinity between resins, reduce the frictional heat generated during extrusion, thereby preventing thermal decomposition, and enable a smooth extrusion process. It can provide smooth workability while maintaining mechanical properties similar to those of the base material. For example, the lubricant may be one, or a mixture of two or more, selected from the group consisting of stearates, palmitates, and laurates, which are natural substances with high environmental friendliness, and sorbitol may be used, but it is not limited thereto.

In addition, the biodegradable resin composition for extrusion coating may comprise the lubricant in an amount of 0.05 phr to 10 phr. For example, the content of the lubricant may be 0.05 phr to 5 phr, 0.1 phr to 3.5 phr, 0.2 phr to 3 phr, 0.5 phr to 2.5 phr, or 1 phr to 2 phr.

The chain extender may comprise at least one selected from the group consisting of 2,5-dimethyl-2,5-(di-(tert-butylperoxy)hexane (DTBPH), pyromellitic dianhydride (PMDA), hexamethylene diisocyanate (HMDI), dicumyl peroxide (DCP), polycarbodiimide (PCDI), di-(tert-butylperoxyisopropyl)benzene (DTBPIB), epoxides, polyamides, and oxazolines.

In addition, the biodegradable resin composition for extrusion coating may comprise the chain extender in an amount of 0.05 phr to 5 phr. For example, the content of the chain extender may be 0.05 phr to 4 phr, 0.1 phr to 3 phr, 0.15 phr to 2 phr, 0.2 phr to 1.5 phr, or 0.2 phr to 1 phr.

According to an embodiment of the present disclosure, the melt flow index (MI) of the biodegradable resin composition for extrusion coating measured at 190°C and 2.16 kg according to ASTM D1238 may be 5 g/10 minutes to 60 g/10 minutes, 5 g/10 minutes to 50 g/10 minutes, 5 g/10 minutes to 42 g/10 minutes, 7 g/10 minutes to 45 g/10 minutes, 7 g/10 minutes to 30 g/10 minutes, 7 g/10 minutes to 25 g/10 minutes, 8 g/10 minutes to 60 g/10 minutes, 10 g/10 minutes to 60 g/10 minutes, 14 g/10 minutes to 60 g/10 minutes, 15 g/10 minutes to 60 g/10 minutes, 20 g/10 minutes to 60 g/10 minutes, 8 g/10 minutes to 40 g/10 minutes, 10 g/10 minutes to 40 g/10 minutes, or 10 g/10 minutes to 35 g/10 minutes.

As the melt flow index satisfies the above range, processability suitable for an extrusion coating process can be secured. Specifically, if the melt flow index is less than 5 g/10 minutes, surface crystallization and solidification proceed rapidly, along with film extrusion, making it difficult to secure sufficient bonding to a substrate. Accordingly, the processing temperature must be raised to 260°C or higher to ensure sufficient bonding to a substrate such as paper or a nonwoven fabric that is mainly used.

However, at a temperature of 260°C or higher, the melt strength of most biodegradable resins decreases, making high-speed processing impossible, and thermal decomposition may take place, or the flowability may become unstable, making smooth processing difficult. In addition, if the melt flow index exceeds 60 g/10 minutes, the melt strength of the resin is lowered, making it difficult to form a coating layer, i.e., a molten resin layer. Even if a molten resin layer is formed, if the processing speed is increased, the thickness may increase unstably in a weak part of the molten resin layer, resulting in very low thickness uniformity.

In addition, the biodegradable resin composition for extrusion coating may have a viscosity reduction rate (S) of 25% to 99% according to the following Equation 1.

$$[\text{Equation 1}]$$

$$S = ((S_{100} - S_1)/S_1) \times 100$$

In Equation 1, when the viscosity of the biodegradable resin composition for extrusion coating is measured at 210°C at a shear rate (1/s) of 1 to 100, $S_1$ is the viscosity (Pa·s) measured at the shear rate of 1, and $S_{100}$ is the viscosity (Pa·s) measured at the shear rate of 100.

For example, the viscosity reduction rate (S) according to the above Equation 1 may be 25% to 98%, 30 % to 97%, 40% to 95 %, 42% to 98%, 42% to 95%, 40% to 90 %, 50% to 87%, or 55% to 85%.

As the viscosity reduction rate (S) according to the above Equation 1 in the biodegradable resin composition for extrusion coating according to an embodiment of the present disclosure satisfies the above range, flowability suitable for an extrusion process can be secured even at 210°C, which is an extrusion process temperature lower than conventional ones.

The shear rate may be measured using a rotational rheometer, but it is not limited thereto.

$S_1$ may be 50 Pa·s to 1,200 Pa·s, and $S_{100}$ may be 30 Pa·s to 300 Pa·s. For example, $S_1$ may be 50 Pa·s to 1000 Pa·s, 50 Pa·s to 900 Pa·s, 50 Pa·s to 850 Pa·s, 50 Pa·s to 750 Pa·s, 50 Pa·s to 500 Pa·s, 100 Pa·s to 600 Pa·s, 120 Pa·s to 550 Pa·s, or 150 Pa·s to 400 Pa·s, and $S_{100}$ may be 45 Pa·s to 200 Pa·s, 50 Pa·s to 150 Pa·s, 60 Pa·s to 100 Pa·s, or 70 Pa·s to 90 Pa·s.

In addition, the biodegradable resin composition for extrusion coating may have a viscosity ($S_{10}$) of 40 Pa·s to 800 Pa·s, 50 Pa·s to 650 Pa·s, 55 Pa·s to 500 Pa·s, 60 Pa·s to 400 Pa·s, or 70 Pa·s to 350 Pa·s, when measured at a shear rate (1/s) of 10 at 210°C.

As $S_1$, $S_{10}$, and $S_{100}$ each satisfy the above ranges, processability suitable for an extrusion coating process can be further enhanced.

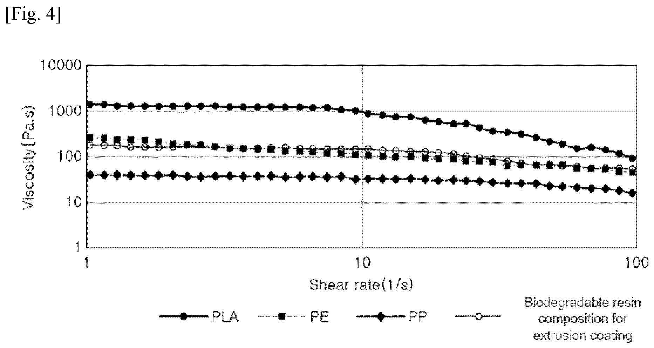

Fig. 4 shows the results of rheology measurements of a biodegradable resin composition for extrusion coating according to an embodiment of the present disclosure and PLA, PE, and PP, which have been conventionally used as extrusion coating resins.

Specifically, for the biodegradable resin composition for extrusion coating comprising the PHA and for PLA, PE, and PP, the viscosity at a shear rate (1/s) of 1 to 100 was measured using a rotational rheometer. In such an event, the measurement temperature for the biodegradable resin composition for extrusion coating was 210°C, the measurement temperature for the PLA was 240°C, and the measurement temperature for the PE and PP was 300°C.

As can be seen from Fig. 4, referring to the viscosity reduction rate at a shear rate of 1 to 100, the viscosity reduction rate of the biodegradable resin composition for extrusion coating of the present disclosure has a flowability similar to that of the PE even though it was processed at a lower temperature than the PE. Accordingly, the biodegradable resin composition for extrusion coating according to an embodiment of the present disclosure can have similar flowability to that of PE, which has been conventionally used as a resin for extrusion coating. It has excellent extrusion coating performance that enables processing even at a temperature of 260°C or lower, more specifically, at a temperature of 210°C, at which no thermal decomposition takes place.

In addition, the biodegradable resin composition for extrusion coating may have a repulping value (P, %) of 40% or more according to the following Equation 2.

$$[\text{Equation 2}]$$

$$P = ((24 - R)/24) \times 100$$

In Equation 2, when a biodegradable coating layer is formed using the biodegradable resin composition for extrusion coating on a paper substrate (basis weight: 30 $g/m^2$ to 500 $g/m^2$) to obtain a biodegradable laminate, 24 g of a dry sample thereof is dissociated at a concentration of 1.2% in water (dissociation energy consumption: 20 kWh/t) to obtain a slurry, and the slurry is circulated through a screen in the form of a slit of 0.15 mm at 10 L/minute for 15 minutes, R is the dry mass (g) of the residual substance.

For example, the repulping value according to the above Equation 2 may be 42% or more, 45% or more, 50% or more, 60% or more, 70% or more, 75% or more, or 80% or more. As the repulping value according to the above Equation 2 satisfies the above range, biodegradability is excellent, which can further enhance recyclability.

More specifically, the repulping value may vary depending on the basis weight of a paper substrate used.

## Biodegradable laminate

The biodegradable laminate according to another embodiment of the present disclosure comprises a substrate layer; and a biodegradable coating layer on at least one side of the substrate layer, wherein the biodegradable coating layer is formed from a biodegradable resin composition for extrusion coating comprising a polyhydroxyalkanoate (PHA) in an amount of 5% by weight to 95% by weight, the biodegradable resin composition for extrusion coating has a melt flow index (MI) of 5 g/10 minutes to 60 g/10 minutes when measured at 190°C and 2.16 kg according to ASTM D1238, and the PHA has a weight average molecular weight of 30,000 g/mole to 1,200,000 g/mole.

As the biodegradable laminate comprises a biodegradable coating layer formed from the biodegradable resin composition for extrusion coating, it can be used as a packaging material that is biodegradable in soil and the ocean and applicable to food, industry, cosmetics, and the like.

For example, the biodegradable laminate can be applied to environmentally friendly packaging materials for packaging products, can be used as materials for packaging such food as coffee, cup rice, cup ramen, and dried fish, as well as materials for packaging masks and pharmaceuticals, and can be applied to secondary packaging materials for protecting primarily packaged products, but it is not limited thereto.

In addition, the biodegradable laminate can produce excellent effects when used as a paper pack such as a milk carton that requires oxygen and moisture barrier properties or sealing properties, and the packaging material manufactured using the biodegradable laminate can be in the form of a pouch, a paper container, a sheet, and the like, but it is not limited thereto.

In addition, packaging materials comprising the biodegradable laminate can be biodegraded in soil and the ocean; thus, when they are discarded in nature, especially when discarded into the ocean, they can be decomposed by microorganisms without special conditions for biodegradation.

The substrate layer may preferably be a substrate of a single material from the viewpoint of enhancing the coatability. For example, the substrate may be paper, kraft paper, a fabric, or a nonwoven fabric, and it may be a polyolefin film, a PET film, a nylon film, cotton, metal foil, or wood, but it is not limited thereto. In addition, when the substrate comprises paper or kraft paper, it may be more advantageous for providing an environmentally friendly packaging material since it has better biodegradability than other plastic materials.

The substrate layer may have a thickness of 15 $\mu$m or more. For example, the thickness of the substrate layer may be 15 $\mu$m or more, 20 $\mu$m or more, 50 $\mu$m or more, 70 $\mu$m or more, 100 $\mu$m or more, 130 $\mu$m or more, 150 $\mu$m or more,

200 μm or more, 300 μm or more, or 500 μm or more.

In addition, the substrate layer may have a basis weight of 30 g/m² to 500 g/m². For example, the substrate layer may be paper, kraft paper, a woven fabric, a knitted fabric, or a nonwoven fabric, and the basis weight of the substrate may be 30 g/m² to 500 g/m², 30 g/m² to 350 g/m², 30 g/m² to 200 g/m², 50 g/m² to 200 g/m², 80 g/m² to 200 g/m², 100 g/m² to 200 g/m², 130 g/m² to 190 g/m², 150 g/m² to 185 g/m², or 120 g/m² to 320 g/m².

Meanwhile, a barrier layer may be disposed on at least one side of the substrate layer. An environmentally friendly blocking layer may be coated on the surface of the substrate layer to have moisture and/or oxygen barrier properties, or a functional coating layer having antistatic properties or adhesive properties may be further formed. The functional coating layer may comprise a primer coating layer and an adhesive coating layer, which may have materials and physical properties that are commonly used as long as they do not impair the effect desired in the present disclosure.

The biodegradable coating layer may have a thickness of 5 μm to 70 μm, 5 μm to 50 μm, 5 μm to 40 μm, or 6 μm to 30 μm.

The biodegradable coating layer may have a thermal adhesive strength (sealing strength) of 500 gf or more. For example, the thermal adhesive strength (sealing strength) of the biodegradable coating layer may be 600 gf or more, 800 gf or more, 1,000 gf or more, or 1,200 gf or more. If the thermal adhesive strength of the biodegradable coating layer obtained through an extrusion coating process is less than 500 gf, it may not be applicable as a packaging material, and its use may be limited, such as being used only for low-weight packaging materials.

The biodegradable coating layer may have a peel strength of 200 gf or more. For example, the peel strength of the biodegradable coating layer may be 300 gf or more, 350 gf or more, 400 gf or more, or 500 gf or more.

**Process for preparing a biodegradable laminate**

The process for preparing a biodegradable laminate according to another embodiment of the present disclosure comprises preparing a biodegradable resin composition for extrusion coating; and extrusion coating the biodegradable resin composition for extrusion coating on at least one side of a substrate to form a biodegradable coating layer, wherein the biodegradable resin composition for extrusion coating comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, and the PHA has a weight average molecular weight of 30,000 g/mole to 1,200,000 g/mole.

Details on the biodegradable resin composition for extrusion coating are as described above.

The amount of the biodegradable resin composition for extrusion coating coated on at least one side of the substrate may be 6 g/m² to 120 g/m², 6 g/m² to 100 g/m², 8 g/m² to 80 g/m², 9 g/m² to 70 g/m², 10 g/m² to 60 g/m², 12 g/m² to 60 g/m², or 13 g/m² to 45 g/m². As the coating amount satisfies the above range, coatability, productivity, and processability can be further enhanced.

The coating step may be carried out at 150°C to 260°C. For example, the coating step may be an extrusion coating step and may be carried out at 150°C to 250°C, 150°C to 240°C, or 160°C to 210°C. The coating step, specifically the extrusion coating step, can be carried out at a temperature lower than the conventional temperature of 300°C while still ensuring sufficient thermal adhesive strength and flowability.

Since a low coating amount is required at a high processing speed in extrusion coating, high-speed processing is not possible when the melt strength is low; thus, it may be difficult to produce a thin coating layer. However, the biodegradable resin composition for extrusion coating according to an embodiment of the present disclosure can secure sufficient physical properties, more specifically, flowability such as melt viscosity, even at low temperatures; thus, it can also produce a coating layer having a thin thickness.

**Mode for the Invention**

Hereinafter, the present disclosure will be described in more detail with reference to the following examples. But the following Examples are intended to illustrate the present disclosure, and the scope of the Examples is not limited thereto only.

**[Example]**

**Preparation of a biodegradable resin composition for extrusion coating**

**Example 1-1**

A polylactic acid resin (PLA, manufacturer: TotalEnergies Corbion, weight average molecular weight (Mw): 120,000 g/mole to 250,000 g/mole, melt flow index (MI) at 190°C and 2.16 kg according to ASTM D1238: 10 g/10 minutes to 40 g/10 minutes) and a polyhydroxyalkanoate (PHA; poly(3-hydroxybutylrate-co-4-hydroxybutylrate), 4-hydroxybutyrate (4-HB) content: 0.1% by weight, weight average molecular weight (Mw): 600,000 g/mole, melt flow index at 190°C and 2.16 kg according to ASTM D1238: 2 g/10 minutes to 15 g/10 minutes) were mixed at a weight ratio of 95:5. 1 phr of an epoxide-based chain extender and 2 phr of a sorbitol-based lubricant were added thereto to prepare a biodegradable resin composition for extrusion coating (melt flow index at 190°C and 2.16 kg: 25 g/10 minutes). Here, phr (per hundred resin) refers to a unit of input amount of a material added per 100 parts by weight of a polymer (1 phr: 1 g input amount when the polymer is 100 g).

**Example 1-2**

A biodegradable resin composition for extrusion coating (melt flow index at 190°C and 2.16 kg: 24 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was used.

**Example 1-3**

A biodegradable resin composition for extrusion coating (melt flow index at 190°C and 2.16 kg: 17 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 80:20.

**Example 1-4**

A biodegradable resin composition for extrusion coating (melt flow index at 190°C and 2.16 kg: 42 g/10 minutes) was prepared in the same manner as in Example 1-1, except that a polyhydroxyalkanoate (PHA; 4-hydroxybutyrate (4-HB) content: 46% by weight, weight average molecular weight (Mw): 120,000 g/mole, melt flow index at 190°C and 2.16 kg according to ASTM D1238: 20 g/10 minutes to 60 g/10 minutes) was mixed with the PLA at a weight ratio of 50:50.

**Example 1-5**

A biodegradable resin composition for extrusion coating (melt flow index at 190°C and 2.16 kg: 14 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 50:50.

**Example 1-6**

A biodegradable resin composition for extrusion coating (melt flow index at 190°C and 2.16 kg: 7 g/10 minutes) was prepared in the same manner as in Example 1-1, except that a polyhydroxyalkanoate (PHA; 4-hydroxybutyrate (4-HB) content: 46% by weight, weight average molecular weight (Mw): 1,200,000 g/mole, melt flow index at 190°C and 2.16 kg according to ASTM D1238: 0.5 g/10 minutes to 3 g/10 minutes) was mixed with the PLA at a weight ratio of 50:50.

**Example 1-7**

A biodegradable resin composition for extrusion coating (melt flow index at 190°C and 2.16 kg: 10 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 30:70.

**Example 1-8**

A biodegradable resin composition for extrusion coating (melt flow index at 190°C and 2.16 kg: 5 g/10 minutes) was prepared in the same manner as in Example 1-1, except that a polyhydroxyalkanoate (PHA; 4-hydroxybutyrate (4-HB) content: 0.1% by weight, weight average molecular weight (Mw): 600,000 g/mole, melt flow index at 190°C and 2.16 kg according to ASTM D1238: 2 g/10 minutes to 15 g/10 minutes) was mixed with the PLA at a weight ratio of 5:95.

**Example 1-9**

A biodegradable resin composition for extrusion coating (melt flow index at 190°C and 2.16 kg: 5 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 5:95.

**Comparative Example 1-1**

A biodegradable resin composition for extrusion coating (melt flow index at 190°C and 2.16 kg: 24 g/10 minutes) was prepared in the same manner as in Example 1-1, except that a polyhydroxyalkanoate (PHA; 4-hydroxybutyrate (4-HB) content: 0.1% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 97:3.

**Comparative Example 1-2**

A biodegradable resin composition for extrusion coating (melt flow index at 190°C and 2.16 kg: 22 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was mixed with the PLA at a weight ratio of 97:3.

**Comparative Example 1-3**

A biodegradable resin composition for extrusion coating (melt flow index at 190°C and 2.16 kg: 42 g/10 minutes) was prepared in the same manner as in Example 1-1, except that a polyhydroxyalkanoate (PHA; 4-hydroxybutyrate (4-HB) content: 46% by weight, weight average molecular weight (Mw): 25,000 g/mole, melt flow index at 190°C and 2.16 kg according to ASTM D1238: 30 g/10 minutes to 90 g/10 minutes) was mixed with the PLA at a weight ratio of 80:20.

**Comparative Example 1-4**

A biodegradable resin composition for extrusion coating (melt flow index at 190°C and 2.16 kg: 13 g/10 minutes) was prepared in the same manner as in Example 1-1, except that a polyhydroxyalkanoate (PHA; 4-hydroxybutyrate (4-HB) content: 0.05% by weight, weight average molecular weight (Mw): 600,000 g/mole) was mixed with the PLA at a weight ratio of 50:50.

**Comparative Example 1-5**

A biodegradable resin composition for extrusion coating (melt flow index at 190°C and 2.16 kg: 11 g/10 minutes) was prepared in the same manner as in Example 1-1, except that a polyhydroxyalkanoate (PHA; 4-hydroxybutyrate (4-HB) content: 64% by weight, weight average molecular weight (Mw): 600,000 g/mole) was mixed with the PLA at a weight ratio of 50:50.

**Comparative Example 1-6**

A biodegradable resin composition for extrusion coating (melt flow index at 190°C and 2.16 kg: 5 g/10 minutes) was prepared in the same manner as in Example 1-1, except that a polyhydroxyalkanoate (PHA; 4-hydroxybutyrate (4-HB) content: 46% by weight, weight average molecular weight (Mw): 1,400,000 g/mole, melt flow index at 190°C and 2.16 kg according to ASTM D1238: 0.5 g/10 minutes to 2 g/10 minutes) was mixed with the PLA at a weight ratio of 50:50.

**Comparative Example 1-7**

A biodegradable resin composition for extrusion coating (melt flow index at 190°C and 2.16 kg: 8 g/10 minutes) was prepared in the same manner as in Example 1-1, except that a polyhydroxyalkanoate (PHA; 4-hydroxybutyrate (4-HB) content: 0.05% by weight, weight average molecular weight (Mw): 600,000 g/mole) was mixed with the PLA at a weight ratio of 30:70.

**Comparative Example 1-8**

A biodegradable resin composition for extrusion coating (melt flow index at 190°C and 2.16 kg: 68 g/10 minutes) was prepared in the same manner as in Example 1-1, except that a polyhydroxyalkanoate (PHA; 4-hydroxybutyrate (4-HB) content: 46% by weight, weight average molecular weight (Mw): 25,000 g/mole, melt flow index at 190°C and 2.16 kg according to ASTM D1238: 30 g/10 minutes to 90 g/10 minutes) was mixed with the PLA at a weight ratio of 5:95.

**Comparative Example 1-9**

A biodegradable resin composition for extrusion coating (melt flow index at 190°C and 2.16 kg: 3 g/10 minutes) was prepared in the same manner as in Example 1-1, except that a polyhydroxyalkanoate (PHA; 4-hydroxybutyrate (4-HB) content: 46% by weight, weight average molecular weight (Mw): 600,000 g/mole, melt flow index at 190°C and 2.16 kg according to ASTM D1238: 1 g/10 minutes to 5 g/10 minutes) was used in an amount of 100 parts by weight without being mixed with the PLA.

**Evaluation Example 1-1: Melt flow index**

The biodegradable resin compositions for extrusion coating prepared in Examples 1-1 to 1-9 and Comparative Examples 1-1 to 1-9 were each measured for the melt flow index (MI) at 190°C and 2.16 kg according to ASTM D1238.

**Evaluation Example 1-2: Rheological analysis**

The biodegradable resin compositions for extrusion coating prepared in Examples 1-1 to 1-9 and Comparative Examples 1-1 to 1-9 were analyzed for rheology using a rotational rheometer (trade name: MCR102e, manufacturer: Anton Paar).

Specifically, for each biodegradable resin composition for extrusion coating, the viscosity at a shear rate (1/s) of 1 to 100 was measured at 210°C using a rotational rheometer (trade name: MCR102e, manufacturer: Anton Paar). In such an event, the viscosity reduction rate (S) was calculated according to the following Equation 1, from which the rheology, i.e., flowability, of the biodegradable resin composition for extrusion coating was evaluated.

$$[\text{Equation 1}]$$

$$S = ((S_{100} - S_1)/S_1) \times 100$$

In Equation 1, when the viscosity of the biodegradable resin composition for extrusion coating was measured at 210°C at a shear rate (1/s) of 1 to 100, $S_1$ was the viscosity (Pa·s) measured at the shear rate of 1, and $S_{100}$ was the viscosity (Pa·s) measured at the shear rate of 100.

[Table 1]

| | Weight ratio of PHA:PLA | PHA | | Biodegradable resin composition for extrusion coating | |
|---|---|---|---|---|---|
| | | 4-HB content (% by weight) | Mw (g/mole) | MI (g/10 minutes) | Viscosity reduction rate (%) |
| Ex. 1-1 | 5:95 | 0.1 | 600,000 | 25 | 98.0 |
| Ex. 1-2 | 5:95 | 46 | 600,000 | 24 | 94.0 |
| Ex. 1-3 | 20:80 | 46 | 600,000 | 17 | 83.0 |
| Ex. 1-4 | 50:50 | 46 | 120,000 | 42 | 98.0 |
| Ex. 1-5 | 50:50 | 46 | 600,000 | 14 | 81.0 |
| Ex. 1-6 | 50:50 | 46 | 1,200,000 | 7 | 42.0 |
| Ex. 1-7 | 70:30 | 46 | 600,000 | 10 | 78.0 |
| Ex. 1-8 | 95:5 | 0.1 | 600,000 | 5 | 98.0 |
| Ex. 1-9 | 95:5 | 46 | 600,000 | 5 | 90.0 |
| C. Ex. 1-1 | 3:97 | 0.1 | 600,000 | 24 | 99.5 |

(continued)

| | Weight ratio of PHA:PLA | PHA | | Biodegradable resin composition for extrusion coating | |
| --- | --- | --- | --- | --- | --- |
| | | 4-HB content (% by weight) | Mw (g/mole) | MI (g/10 minutes) | Viscosity reduction rate (%) |
| C. Ex. 1-2 | 3:97 | 46 | 600,000 | 22 | 99.4 |
| C. Ex. 1-3 | 20:80 | 46 | 25,000 | 42 | 99.9 |
| C. Ex. 1-4 | 50:50 | 0.05 | 600,000 | 13 | 99.8 |
| C. Ex. 1-5 | 50:50 | 64 | 600,000 | 11 | 78.0 |
| C. Ex. 1-6 | 50:50 | 46 | 1,400,000 | 5 | 34.0 |
| C. Ex. 1-7 | 70:30 | 0.05 | 600,000 | 8 | 99.7 |
| C. Ex. 1-8 | 95:5 | 46 | 25,000 | 68 | 99.9 |
| C. Ex. 1-9 | 100:0 | 46 | 600,000 | 3 | 94.0 |

As can be seen from Table 1 above, the biodegradable resin compositions for extrusion coating of Examples 1-1 to 1-9 had rheological properties, particularly, flowability, suitable for an extrusion coating process since both the melt flow index at 190°C and 2.16 kg according to ASTM D1238 and the viscosity reduction rate satisfy the desired ranges. In particular, it has excellent extrusion coating performance that enables processing even at a temperature of 260°C or lower, at a temperature of 210°C, at which no thermal decomposition takes place.

**Preparation of a biodegradable laminate**

**Example 2-1**

The biodegradable resin composition for extrusion coating of Example 1-1 was extrusion-coated on one side of a paper substrate (manufacturer: Hankuk Paper, basis weight: 280 g/m$^2$, width: 1,000 mm, thickness: 0.352 mm) using a 120-Φ extruder (1,600-mm wide die), which is extrusion coating equipment for producing paper packaging materials, to prepare a biodegradable laminate comprising a biodegradable coating layer (thickness: 0.045 mm). In such an event, the processing temperature was 210°C, the cooling roll temperature was 23°C, and extrusion coating was carried out at a processing speed starting from 10 m/ minute and increasing to 90 m/minute.

**Examples 2-2 to 2-9 and Comparative Examples 2-1 to 2-9**

Biodegradable laminates were prepared in the same manner as in Example 2-1, except that the biodegradable coating compositions for extrusion coating prepared in Examples 1-2 to 1-9 and Comparative Examples 1-1 to 1-9 were used, respectively. However, in Comparative Examples 2-1 to 2-4 and 2-6 to 2-8, a coating layer was not able to be formed under the above process conditions.

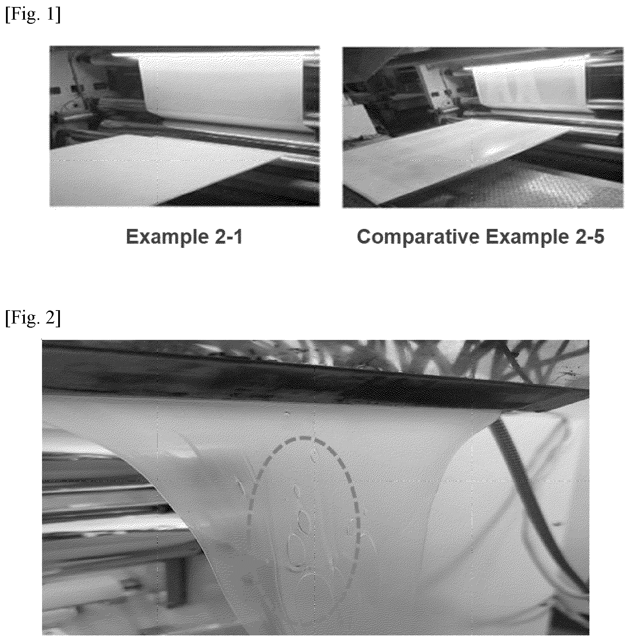

Fig. 2 is a photograph showing that a coating layer was not formed in the extrusion coating process of Comparative Example 2-1. As can be seen from Fig. 2, Comparative Example 2-1 had low melting strength; thus, holes were formed in the molten resin layer, i.e., the coating layer, and a proper coating layer was not formed due to uneven flowability.

**Evaluation Example 2-1: Processability**

The biodegradable laminates of Examples 2-1 to 2-9 and Comparative Examples 2-1 to 2-9 were evaluated for the processability of coating.
Specifically, when extrusion coating was carried out using a 120-Φ extruder (1,600-mm wide die), which is extrusion coating equipment for producing paper packaging materials, at a processing speed starting from 10 m/minute and gradually increasing to 90 m/minute, the state of the formed coating surface was visually observed, and the speed just before the coating surface became uneven, such as when bubbles were formed, was measured. In such an event, when the processing speed at which an uneven coating surface was observed was 60 m/minute or more, it is marked with ∘. When the processing speed at which an uneven coating surface was observed was less than 60 m/minute, it is marked with ✕.

Fig. 1 is a photograph showing the results of evaluating processability according to Evaluation Example 2-1 of Example 2-1 and Comparative Example 2-1. As can be seen from Fig. 1, Example 2-1 had a uniform coating surface, whereas Comparative Example 2-1 had an uneven coating surface.

**Evaluation Example 2-2: Peel strength**

The biodegradable laminates of Examples 2-1 to 2-9 and Comparative Examples 2-5 and 2-9 were each cut to a width of 15 mm and a length of 30 mm to prepare a sample, and the peel strength between the substrate and the biodegradable coating layer was measured at a speed of 200 mm/minute using a universal test machine (trade name: 34SC-1, manufacturer: Instron).

**Evaluation Example 2-3: Thermal adhesive strength**

The biodegradable laminates of Examples 2-1 to 2-9 and Comparative Examples 2-5 and 2-9 were each cut to a width of 15 mm and a length of 30 mm to prepare a sample, and the thermal adhesive strength (sealing strength) between the substrate and the biodegradable coating layer was measured at a speed of 200 mm/minute using a universal test machine (trade name: 34SC-1, manufacturer: Instron). In such an event, sealing between the substrate and the biodegradable coating layer was carried out at a temperature of 140°C for 1 second.

**Evaluation Example 2-4: Recyclability**

The biodegradable laminates of Examples 2-1 to 2-9 and Comparative Examples 2-1 to 2-9 were each evaluated for the recyclability of paper-based products using the UL2485 Environmental Claim Verification Procedure (ECVP).
Specifically, each biodegradable laminate was dried at room temperature for 24 hours, and a sample of 24 g was then prepared. The sample was adjusted to a concentration of 1.2% using a standard dissociator equipped with a power measuring device, and it was then dissociated until the dissociation energy consumption reached 20 kWh/t. The dissociated sample in the form of a slurry was fed to a screen classifier and junction-treated while circulating a total of 30 liters of water at a flow rate of 10 L/minute for 15 minutes. In such an event, the material that passed through the screen in the form of a slit of 0.15 mm in the screen classifier was further junction-treated using a 200-mesh sieve and was prevented from being entrained into the circulating water.
The material remaining on the 200-mesh sieve was placed in a circulation chest containing the fine material that had passed through the 200-mesh sieve and stirred sufficiently. 3 liters of the suspension was collected. The collected suspension was filtered through a filter device using a filter paper of known dry weight, dried in accordance with Section 8 of KS M ISO 638, and weighed. The repulping value (P, %) was calculated according to the following Equation 2 to evaluate recyclability.

$$[\text{Equation } 2]$$

$$P = ((24 - R)/24) \times 100$$

In Equation 2, when a biodegradable coating layer having a thickness of 0.045 mm was formed using the biodegradable resin composition for extrusion coating on a paper substrate (basis weight: 280 g/m$^2$, width: 1,000 mm, and thickness: 0.352 mm) to obtain a biodegradable laminate, 24 g of a dry sample thereof was dissociated at a concentration of 1.2% in water (dissociation energy consumption: 20 kWh/t) to obtain a slurry, and the slurry was circulated through a screen in the form of a slit of 0.15 mm at 10 L/minute for 15 minutes, R is the dry mass (g) of the residual substance.

[Table 2]

| | Processability | | Peel strength (gf) | Sealing strength (gf) | Repulping value (%) |
|---|---|---|---|---|---|
| | Processing speed (m/minute) at which an uneven coating surface was observed | Evaluation result | | | |
| Ex. 2-1 | 70 | ○ | 630 | 1,000 | 72 |
| Ex. 2-2 | 70 | ○ | 580 | 1,800 | 77 |
| Ex. 2-3 | 80 | ○ | 540 | 1,400 | 87 |
| Ex. 2-4 | 60 | ○ | 730 | 600 | 85 |
| Ex. 2-5 | 70 | ○ | 460 | 1,250 | 80 |

(continued)

| | Processability | | Peel strength (gf) | Sealing strength (gf) | Repulping value (%) |
|---|---|---|---|---|---|
| | Processing speed (m/minute) at which an uneven coating surface was observed | Evaluation result | | | |
| Ex. 2-6 | 90 | ○ | 300 | 1,800 | 75 |
| Ex. 2-7 | 80 | ○ | 400 | 1,000 | 81 |
| Ex. 2-8 | 60 | ○ | 500 | 750 | 78 |
| Ex. 2-9 | 60 | ○ | 450 | 800 | 77 |
| C. Ex. 2-1 | - | × | - | - | - |
| C. Ex. 2-2 | - | × | - | - | - |
| C. Ex. 2-3 | - | × | - | - | - |
| C. Ex. 2-4 | - | × | - | - | - |
| C. Ex. 2-5 | 20 | × | 300 | 1,000 | 82 |
| C. Ex. 2-6 | - | × | - | - | - |
| C. Ex. 2-7 | - | × | - | - | - |
| C. Ex. 2-8 | - | × | - | - | - |
| C. Ex. 2-9 | 10 | × | 80 | 450 | 85 |
| * When a biodegradable coating layer was not formed and thus not measured, it is marked with "-." | | | | | |

As can be seen from Table 2 above, the biodegradable laminates of Examples 2-1 to 2-9 were excellent in all of processability, peel strength, sealing strength, and recyclability. Specifically, the biodegradable laminates of Examples 2-1 to 2-9 comprised a biodegradable coating layer formed using the biodegradable resin compositions of Examples 1-1 to 1-9, respectively, whereby it was possible to form a uniform coating layer on a coating surface at a low processing temperature of 210°C, which was lower than that of the prior art, and a processing speed of 60 m/minute or more, and they were excellent in peel strength and sealing strength with a substrate, and they had a high repulping value, resulting in excellent recyclability.

In contrast, the biodegradable laminates of Comparative Examples 2-1 to 2-3 and 2-8 used the biodegradable resin compositions of Comparative Examples 1-1 to 1-3 and 1-8 with low flowability, respectively, whereby it was not possible to form a coating layer under the above process conditions. In Comparative Examples 2-4, 2-6, and 2-7, coating operation was not possible due to the load imposed on the extruder. In addition, although it was possible to form a coating layer in Comparative Examples 2-5 and 2-9, the coating surface was uneven even at a very low processing speed, as compared with Examples 2-1 to 2-9, resulting in low processability and low quality. In particular, Comparative Example 2-9 had much lower peel strength and sealing strength than those of Examples 2-1 to 2-9.

**Claims**

1.    A biodegradable resin composition for extrusion coating, which comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, wherein the PHA has a weight average molecular weight of 30,000 g/mole to 1,200,000 g/mole.

2.    The biodegradable resin composition for extrusion coating of claim 1, which has a viscosity reduction rate (S) of 25% to 99% according to the following Equation 1:

[Equation 1]

$$S = ((S_{100} - S_1)/S_1) \times 100$$

in Equation 1, when the viscosity of the biodegradable resin composition for extrusion coating is measured at 210°C at a shear rate (1/s) of 1 to 100, $S_1$ is the viscosity (Pa·s) measured at the shear rate of 1, and $S_{100}$ is the viscosity (Pa·s) measured at the shear rate of 100.

3. The biodegradable resin composition for extrusion coating of claim 2, wherein $S_1$ is 50 Pa·s to 1,200 Pa·s, and $S_{100}$ is 30 Pa·s to 300 Pa·s.

4. The biodegradable resin composition for extrusion coating of claim 1, which has a repulping value (P, %) of 40% or more according to the following Equation 2:

$$[\text{Equation 2}]$$

$$P = ((24 - R)/24) \times 100$$

in Equation 2, when a biodegradable coating layer is formed using the biodegradable resin composition for extrusion coating on a paper substrate (basis weight: 30 g/m$^2$ to 500 g/m$^2$) to obtain a biodegradable laminate, 24 g of a dry sample thereof is dissociated at a concentration of 1.2% in water (dissociation energy consumption: 20 kWh/t) to obtain a slurry, and the slurry is circulated through a screen in the form of a slit of 0.15 mm at 10 L/minute for 15 minutes, R is the dry mass (g) of the residual substance.

5. The biodegradable resin composition for extrusion coating of claim 1, which has a biocarbon content of 25% or more based on the radiocarbon isotope content according to ASTM D 6866-20 Method B (AMS).

6. The biodegradable resin composition for extrusion coating of claim 1, wherein the polyhydroxyalkanoate (PHA) comprises a 4-hydroxybutyrate (4-HB) repeat unit in an amount of 0.1% by weight to 50% by weight.

7. The biodegradable resin composition for extrusion coating of claim 1, wherein the PHA has a melt flow index (MI) of 0.5 g/10 minutes to 60 g/10 minutes when measured at 190°C and 2.16 kg according to ASTM D1238.

8. The biodegradable resin composition for extrusion coating of claim 1, wherein the PHA comprises at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 4-hydroxybutyrate (4-HB), 5-hydroxyvalerate (5-HV), and 6-hydroxyhexanoate (6-HH).

9. The biodegradable resin composition for extrusion coating of claim 1, wherein the biodegradable resin composition for extrusion coating further comprises at least one selected from the group consisting of polylactic acid (PLA), polybutylene adipate terephthalate (PBAT), polybutylene succinate (PBS), thermoplastic starch (TPS), polyvinyl alcohol (PVA), polycaprolactone (PCL), bio-derived polyethylene, and bio-derived polypropylene.

10. The biodegradable resin composition for extrusion coating of claim 1, wherein the biodegradable resin composition for extrusion coating further comprises a polylactic acid (PLA), and the PLA has a melt flow index (MI) of 3 g/10 minutes to 40 g/10 minutes when measured at 190°C and 2.16 kg according to ASTM D1238, a melt flow index (MI) of 25 g/10 minutes to 80 g/10 minutes when measured at 210°C and 2.16 kg according to ASTM D1238, and a glass transition temperature (Tg) of 45°C to 65°C.

11. The biodegradable resin composition for extrusion coating of claim 10, wherein the weight ratio of the PHA to the PLA is 5:95 to 95:5.

12. The biodegradable resin composition for extrusion coating of claim 1, wherein the biodegradable resin composition for extrusion coating further comprises at least one additive selected from the group consisting of slip agents, plasticizers, antioxidants, nucleating agents, lubricants, melt strength enhancers, and chain extenders.

13. The biodegradable resin composition for extrusion coating of claim 12, wherein the biodegradable resin composition for extrusion coating comprises the additive in an amount of 0.05 phr to 20 phr.

14. The biodegradable resin composition for extrusion coating of claim 12, wherein the plasticizer comprises at least one selected from the group consisting of ethyl acetate, polyethylene glycol (PEG), triethyl citrate (TEC), erucamide, oleamide, stearamide, epoxidized soybean oil, dibutyl phthalate (DBP), carnauba wax, glycerol mono stearate (GMS), sorbitol, polyvinylacetate polymers, and vinyl acetate copolymers.

15. The biodegradable resin composition for extrusion coating of claim 12, wherein the chain extender comprises at least one selected from the group consisting of 2,5-dimethyl-2,5-(di-(tert-butylperoxy)hexane (DTBPH), pyromellitic dianhydride (PMDA), hexamethylene diisocyanate (HMDI), dicumyl peroxide (DCP), polycarbodiimide (PCDI), di-(tert-butylperoxyisopropyl)benzene (DTBPIB), epoxides, polyamides, and oxazolines.

16. A process for preparing a biodegradable laminate, which comprises preparing a biodegradable resin composition for extrusion coating; and extrusion coating the biodegradable resin composition for extrusion coating on at least one side of a substrate to form a biodegradable coating layer,
wherein the biodegradable resin composition for extrusion coating comprises a polyhydroxyalkanoate (PHA) in an amount of 5% by weight to 95% by weight and has a melt flow index (MI) of 5 g/10 minutes to 60 g/10 minutes when measured at 190°C and 2.16 kg according to ASTM D1238, and the PHA has a weight average molecular weight of 30,000 g/mole to 1,200,000 g/mole.

[Fig. 1]

Example 2-1    Comparative Example 2-5

[Fig. 2]

[Fig. 3]

[Fig. 4]

## INTERNATIONAL SEARCH REPORT

International application No.

**PCT/KR2023/016179**

| A. | CLASSIFICATION OF SUBJECT MATTER |
|---|---|

**C08L 67/04**(2006.01)i; **C08K 5/00**(2006.01)i; **C09D 167/04**(2006.01)i

According to International Patent Classification (IPC) or to both national classification and IPC

| B. | FIELDS SEARCHED |
|---|---|

Minimum documentation searched (classification system followed by classification symbols)

C08L 67/04(2006.01); C08K 3/38(2006.01); C08K 5/1515(2006.01); C08L 101/16(2006.01); C08L 67/02(2006.01); C08L 97/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리하이드록시알카노에이트(polyhydroxyalkanoate), 용융흐름지수(melt flow index), 압출 코팅(extrusion coating), 생분해성 수지(biodegradable resin), 폴리락트산(polylactic acid)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0317301 A1 (POLY-MED, INC.) 14 October 2021 (2021-10-14) See paragraphs [0004]-[0023], [0042], [0043], [0055] and [0061]-[0074]. | 1-14,16 |
| Y | | 15 |
| Y | CN 111205602 A (CHINA PETROLEUM & CHEMICAL CORPORATION et al.) 29 May 2020 (2020-05-29) See paragraphs [0006]-[0023]. | 15 |
| A | CN 102977563 A (JIANGSU TORISE BIOMATERIALS CO., LTD.) 20 March 2013 (2013-03-20) See entire document. | 1-16 |
| A | CN 112898748 A (RHENIUM PLASTIC (KUNSHAN) CO., LTD.) 04 June 2021 (2021-06-04) See entire document. | 1-16 |

☑ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2024** | **25 January 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016179** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 6111006 A (WADDINGTON, Simon Dominic) 29 August 2000 (2000-08-29)<br>See entire document. | 1-16 |

## INTERNATIONAL SEARCH REPORT
### Information on patent family members

International application No.

**PCT/KR2023/016179**

| Patent document cited in search report | | | Publication date (day/month/year) | Patent family member(s) | | | Publication date (day/month/year) |
|---|---|---|---|---|---|---|---|
| US | 2021-0317301 | A1 | 14 October 2021 | None | | | |
| CN | 111205602 | A | 29 May 2020 | None | | | |
| CN | 102977563 | A | 20 March 2013 | None | | | |
| CN | 112898748 | A | 04 June 2021 | None | | | |
| US | 6111006 | A | 29 August 2000 | CA | 2179522 | A1 | 29 June 1995 |
| | | | | CA | 2179522 | C | 11 October 2005 |
| | | | | EP | 0746585 | A1 | 11 December 1996 |
| | | | | EP | 0746585 | B1 | 29 March 2000 |
| | | | | JP | 09-507441 | A | 29 July 1997 |
| | | | | JP | 2008-024002 | A | 07 February 2008 |
| | | | | JP | 4297514 | B2 | 15 July 2009 |
| | | | | JP | 4694544 | B2 | 08 June 2011 |
| | | | | WO | 95-17454 | A1 | 29 June 1995 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20210008466